Europäisches Patentamt

European Patent Office

Office européen des brevets

(19)

(11) Publication number: **0 171 368**
A1

(12) # EUROPEAN PATENT APPLICATION

(21) Application number: **85830187.2**

(51) Int. Cl.⁴: **E 21 B 19/15,** B 23 Q 3/157

(22) Date of filing: **18.07.85**

(30) Priority: **08.08.84 IT 2226684**

(43) Date of publication of application: **12.02.86**
**Bulletin 86/7**

(84) Designated Contracting States: **AT BE CH DE FR GB LI**
**LU NL SE**

(71) Applicant: **REMOSA S.p.A., Viale Pula, 37,**
**I-09100 Cagliari (IT)**

(72) Inventor: **Mambrini, Romano, Via di Torre Gaia, 18,**
**I-00133 Roma (IT)**

(74) Representative: **Perani, Aurelio et al, c/o**
**JACOBACCI-CASETTA & PERANI S.p.A 7, Via Visconti di**
**Modrone, I-20122 Milano (IT)**

(54) **Apparatus for transferring drill rods from a rod store to the rotation head of a drilling machine and vice versa.**

(57) The apparatus includes a store constituted by an up-wardly-open, rectangular, box-shaped container (12) holding a plurality of drill rods (26) piled on one another. One longitudinal edge (13) of the container (12) has a plurality of saddles (14) for temporarily supporting a rod (26) to be transferred after it has been taken from the container (12) and placed in the saddles (14). The apparatus also includes a straight bar (27) with two coplanar radial arms (28, 29) located at its ends and provided with gripping members (30, 31, 32, 33) for circumferentially engaging and disengaging a drill rod (26). The bar (27) is supported so as to be rotatable about its own axis by a sleeve (46) which is fixed to the wall of the rod container (12) by means of a pin (47) with an axis of rotation perpendicular to the axis of the bar (27) and also perpendicular to the longitudinal extent of the rod container (12). Hydraulic cylinders are provided for displacing (60) the bar (27) with the radial arms (28, 29) angularly about its own axis, for displacing (52) the support sleeve (46) for the bar angularly about the pin (47) connecting it to the rod container (12) and for opening and closing (34, 35) the gripper members (30, 31, 32, 33) carried by the radial arms (28, 29). With this apparatus, a drill rod (26) placed in the saddles (14) on the edge (13) of the container (12) is picked up by the arms (28, 29) fixed to the bar (27) and brought into line with the drill head (6) of the machine or vice versa.

ACTORUM AG

"Apparatus for transferring drill rods from a rod store to the rotation head of a drilling machine and vice versa"

The present invention relates to apparatus for transferring drill rods from a store to the axis of the rotation head of a drilling machine or, vice versa, from the axis of the head to the store.

It is known that in drilling machines, for example for searching for water, geological prospecting or for civil engineering work, considerable working time is taken up with the connection of the rods during drilling and with their disconnection during the recovery stage after drilling.

It is known that, in the drilling stage, individual rods must be taken up from a store as working proceeds, brought into line with the rotation head of the machine, held in this position, and connected at one end to the chuck of the head and at the other end to the rod which has already been driven into the ground.

These operations must be carried out in reverse, however, during the stage of recovery of the rods at the end of the drilling.

In order to reduce the time for transfer, connection and disconnection of the rods, as well as to facilitate these operations, it has been proposed to equip drilling machines of the type mentioned above with suitable transfer apparatus constituted essentially by a rotary-drum loader located at the side of the derrick with its axis of rotation parallel to the longitudinal axis of the derrick itself. Seats are formed in the periphery of the rotatable drum, each of which houses a respective drill rod. Translation members move the drum towards and away from the derrick so that, in combination with a stepwise rotation of the drum about its axis, the seats around the periphery of the drum are aligned successively with the axis of rotation of the drilling head and a drill rod can therefore be transferred from the seat in the drum to the head of the machine, or vice versa, in a substantially automatic manner with a notable reduction in working time.

This known apparatus is not entirely satisfactory, however, since the number of rods which can be supported around the periphery of the drum loader is very limited and hence it is necessary in turn continuously to resupply with rods the seats emptied during the drilling operation or to remove the rods as the seats in the drum become occupied during the recovery stage.

The problem behind the present invention, therefore, is the provision of rod transfer apparatus on a drilling machine, which allows the use of a store capable of containing a relatively high number of drill rods piled on one another so as to allow prolonged drilling to be carried out without the need to replenish the supply of rods for the machine, and which at the same time allows the substantially automatic transfer of individual rods.

The problem is solved in accordance with the invention by apparatus for transferring drill rods from a store containing a plurality of rods to the actual axis of the rotation head of a drilling machine and vice versa, comprising a store containing a plurality of drill rods piled on one another, and means for

- 3 -

manipulating and transferring the rods,characterised in that the store is constituted by an upwardly-open, box shaped container with a longitudinal extent at least equal to the length of a drill rod, one of the longitudinal edges of the container having a plurality of saddles for the temporary receipt and support of a rod to be transferred, and in that the means for manipulating and transferring the rods include a straight bar, a pair of coplanar arms spaced from each other and rigidly fixed radially to the bar, each arm having a gripping member at its free end for circumferentially engaging and disengaging a drill rod, a sleeve for rotatably supporting the bar about its longitudinal axis, the sleeve being connected to the rod container by means of a pin with an axis of rotation perpendicular to the longitudinal axis of the bar and perpendicular to the longitudinal extent of the container itself, means for effecting the angular displacement of the bar about its longitudinal axis, means for angularly displacing the support sleeve about the pin fixed to the structure of the container, and means for effecting the opening and closing of the gripper member of each arm.

The invention will now be described in greater detail with reference to one practical embodiment given purely by way of non-limiting example and shown in the appended drawings, in which:

Figure 1 is a schematic perspective view of a drilling machine of the self-propelled type for searching for water, geological prospecting, and civil engineering work equipped with transfer apparatus according to the invention;

Figure 2 is a schematic side view of the drilling machine showing the rod transfer apparatus in the position in which a rod is in alignment with the axis of the rotation head and with the axis of the rod already driven into the ground;

Figure 3 is a partial cross-sectional view of the transfer apparatus according to the invention with particular reference to the conformation of the drill rod store;

Figures 4, 5 and 6 show schematically the transfer apparatus according to the invention in successive positions assumed during the transfer of a rod;

Figure 7 is a perspective view of part of the transfer apparatus with particular reference to the means of connection to the rod store;

Figure 8 is a partial side view of the transfer apparatus with the bar in a vertical position;

Figure 9 is a plan view of the transfer apparatus in the position corresponding to that of Figure 8.

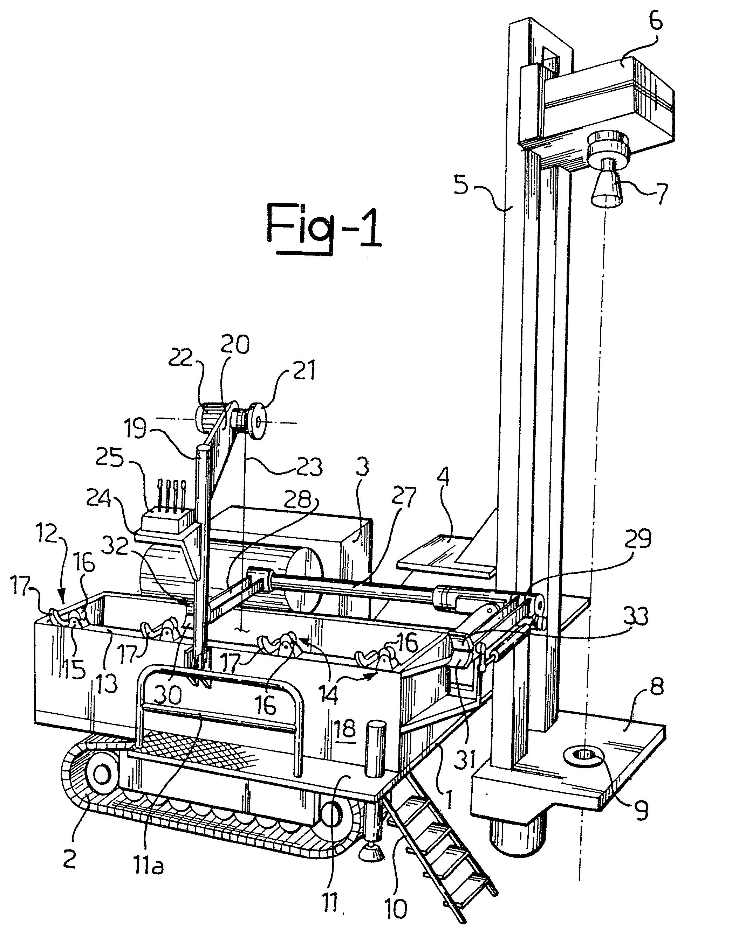

With reference to the drawings and particularly with reference to Figure 1, the platform of a self-propelled drilling machine is indicated 1 and is mounted on crawler tracks schematically indicated 2.

Housed on the platform 1 in an entirely conventional manner are the motor unit, generally indicated 3, and the support 4 for the derrick, schematically indicated 5. The drilling head 6 with its chuck 7 is mounted on the derrick 5 in an entirely conventional manner. The head 6 may be moved longitudinally of the derrick 5, by means not illustrated, as the chuck 7 rotates. Beneath the derrick 5 itself is fixed the drilling platform, generally indicated 8, which is provided with a hole 9 through which the rods pass during drilling. A ladder 10 allows access to the platform 1 of the machine and more precisely to a zone 11 thereof protected by a rail 11a. A drill rod store is located on the platform 1. This store is constituted by a container 12 which is open upwardly and rectangular in plan. Along the longitudinal edge 13 of the container 12 is a plurality of saddles, each generally indicated 14. Each saddle 14 comprises a support 15 fixed to the edge 13 by a roller 16 of arcuate profile. Curved retaining members 17 are arranged at the side of each saddle for preventing a rod located on the saddles 14 from moving parallel to itself and falling from the edge 13. A vertical column 19 is fixed to the side wall 18 of the container 12 and has a flag-like arm 20 above the opening of the container 12. The arm 20 carries a winch 21 driven by a hydraulic motor 22. The winch 21, the cables 23 of which hang over the container 12, is used to lift a drill rod from the container 12 and place it on the saddles 14 in a manner which will be clarified in the description below.

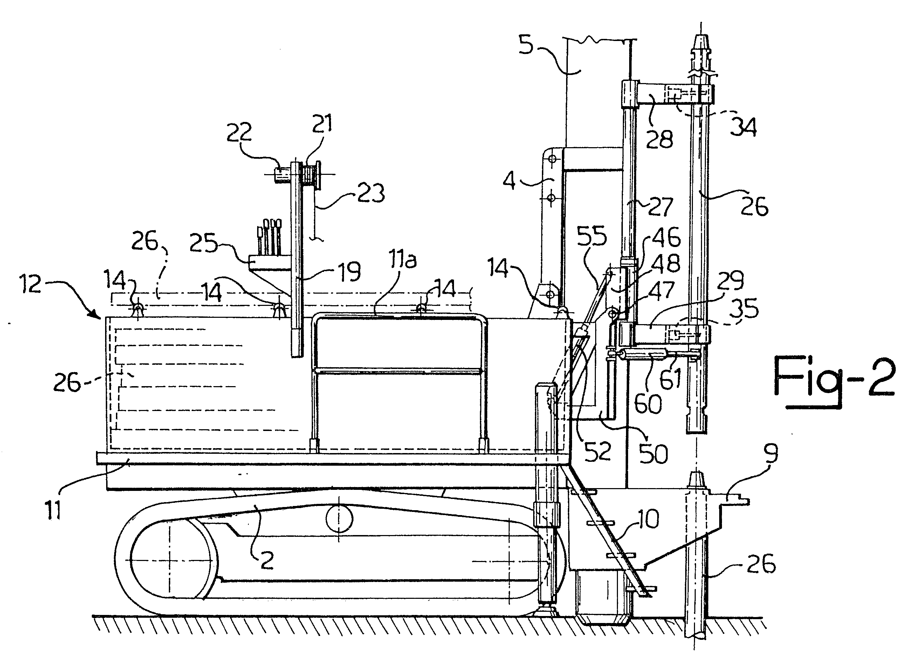

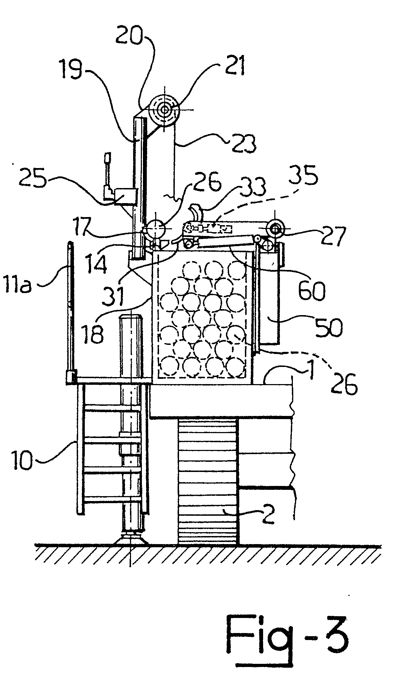

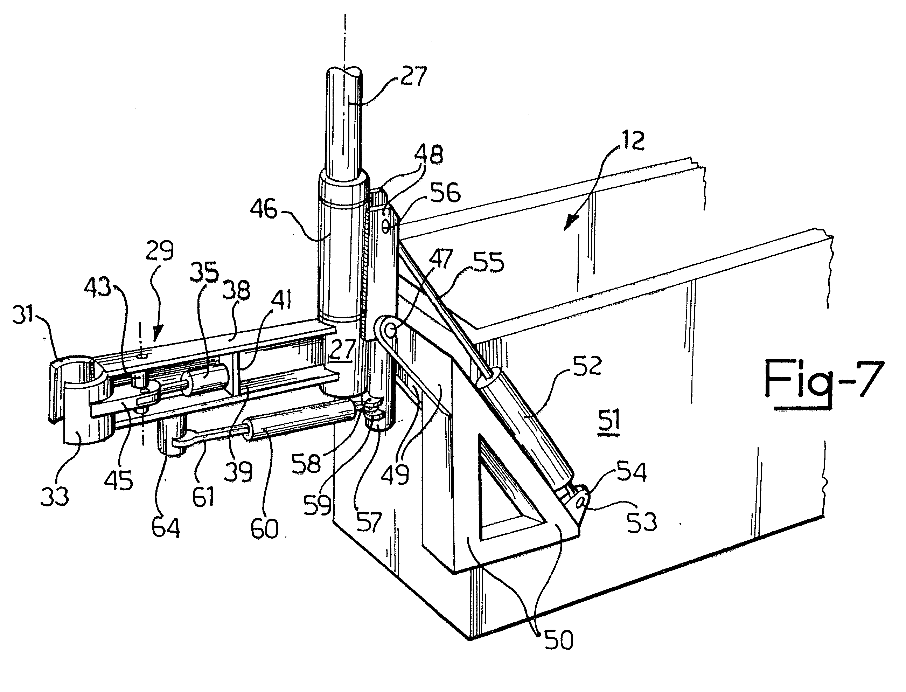

A bracket 24 is also fixed to the column 19 and supports a control unit for the hydraulic circuits operating the apparatus of the invention, as will be better explained below. This control unit is indicated 25. With particular reference to Figures 2 to 9, it is seen that the apparatus for transferring drilling rods, which are indicated 26 and are laid on top of one another in the

0171368

store container 12, comprises a straight bar 27 to the ends of which are fixed arms 28 and 29. These arms are coplanar and fixed radially to the bar 27. At their free ends, the arms 28 and 29 carry respective gripper members constituted by respective fixed jaws 30 and 31 and respective movable jaws 32 and 33; the movable jaws 32 and 33 are operated by respective hydraulic cylinders 34 and 35 (Figure 2-Figure 8) mounted on respective arms 28 and 29. In greater detail, as can be seen from Figure 7, each arm 28 and 29 is constituted by a respective pair of plate-like elements 36, 37 and 38, 39 connected by respective cross members 40 and 41 and by pins 42 and 43 to which, through the levers 44 and 45, the respective movable jaws 32 and 33 are connected. The latter, in cooperation with the fixed jaws, are arranged, when operated for the purpose, to grip circumferentially a drill rod 26 placed on the saddles 14. The bar 27 is rotatably mounted in a support sleeve 46 adjacent the end to which the radial arm 29 is fixed. This support 46 has a pin 47 which passes through plate-shaped appendages 48 fixed to the sleeve 46 and is fixed at its ends to lugs 49 of a support structure 50 fixed in turn to the side wall 51 of the container 12 for the drill rods.

A hydraulic cylinder 52 is connected between the sleeve 46 and the fixed structure 50.

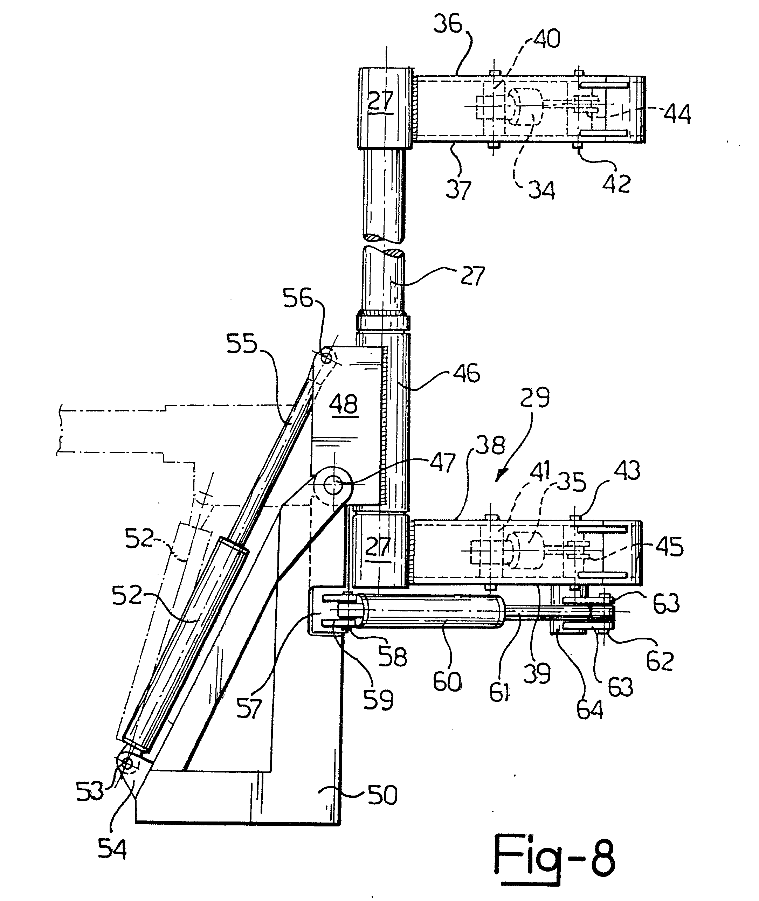

More precisely, as can be seen from Figures 7 and 8, the hydraulic cylinder 52 is articulated by a pin 53 to a lug 54 of the structure 50. The shaft 55 of the cylinder 52, however, is connected through the pin 56 to the plate-shaped elements 48 rigid with the sleeve 46. A lug 57 is fixed between the plate-shaped elements 48 and projects beyond the free end of the bar 27. To this

0171368

lug 57 is articulated, by a pin 58 and lugs 59, the end of a hydraulic cylinder 60 the shaft 61 of which is articulated to a pin 62 and lugs 63 on an appendage 64 projecting laterally from the arm 29. More particularly, the appendage 64 is fixed to the plate-like wall 39 constituting the arm 29.

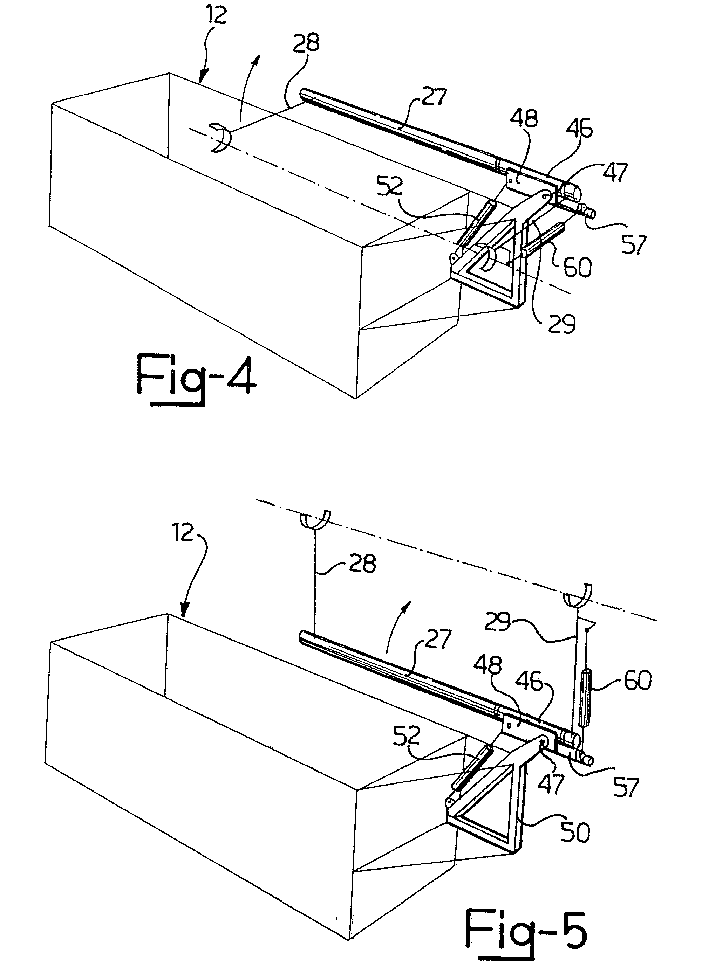

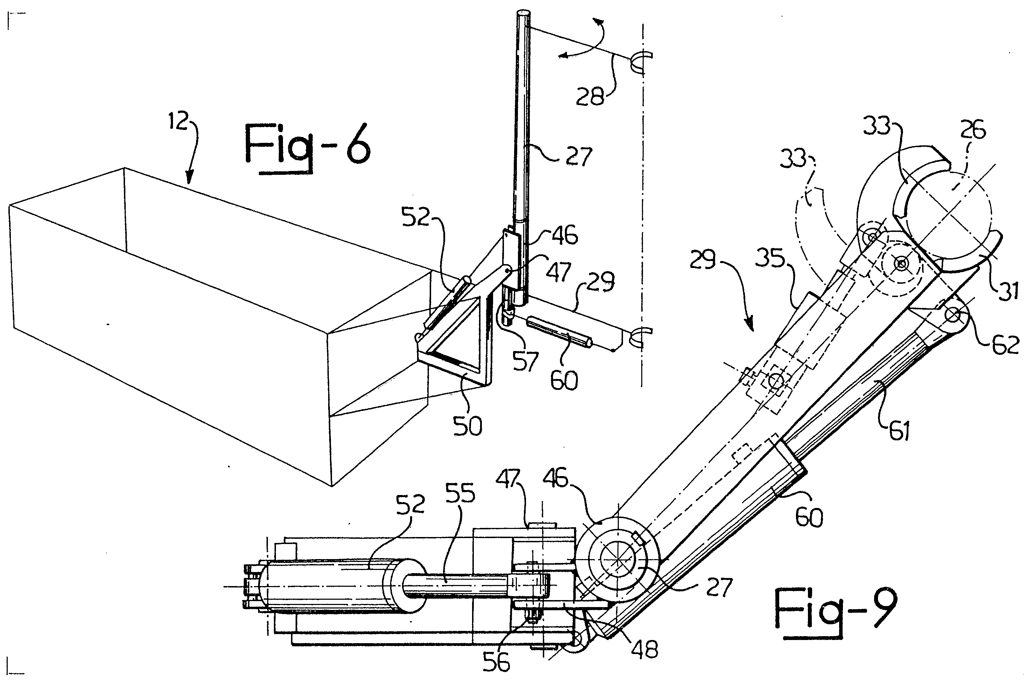

As can be seen from the schematic Figures 4 to 6, the hydraulic cylinder 52 moves the bar 27 angularly through angles within an arc of at least 90° from a position (Figure 4) in which the bar 27 is parallel to the longitudinal edge of the drill rod container 12 to a vertical position shown in Figure 6.

Naturally, if it is wished to adopt any intermediate inclined position, the bar 27 may be located with the necessary inclination so as to be parallel to the derrick 5 which, in a conventional manner, may also assume inclinations relative to the horizontal plane by means of the structure 4 for connecting it to the platform 1 of the machine.

The hydraulic cylinder 60, however, moves the bar 27 angularly about its own longitudinal axis through angles within an arc of substantially 180° between a position in which the radial arms 28 and 29 rigid with bar 27 overlie the store container 12 in a horizontal position with their ends facing the edge 13 provided with the saddles 14 and a completely overturned extreme position, with the possibility of covering any intermediate angular position.

By the combination of the movements imparted by the hydraulic cylinder 52 with those imparted by the hydraulic cylinder 60, it can be seen that a drill rod 26 previously placed on the saddles 14 and gripped by the jaws 30, 31, 32 and 33 of the arms 28 and 29 may be raised and rotated until it comes into the correct alignment necessary for it to be engaged at one end by the chuck 7 of the drilling head 6 and then, at its other end, by the rod 26 which has already been driven into the ground (see Figures 1 and 2).

With a reverse movement during the recovery of the rods at the end of drilling, a rod 26 which has been removed from the ground by the raising of the rotation head 6 along the derrick 5 is gripped by the arms 28 and 29 and, after the necessary disconnection from the chuck 7 and the rod which is still in the ground, is rotated and returned above the store container 12. With the opening of the movable jaws 32 and 33, the rod 26 can fall directly into the store container 12 and lie on top of any others which are already in the container.

With the apparatus according to the invention as described and illustrated above, it can be appreciated that a drilling machine is equipped with a supply of drill rods sufficient for a drilling programme and is also equipped with a device for transferring the rods from the store container to the drilling head and vice versa according to the type of operation being carried out.

Thus, there is obtained the advantage of not only being able to transfer the drill rods substantially automatically but also of having a direct supply of rods in the store container associated with the machine sufficient to complete a drilling programme.

0171368

Naturally, the invention may be realized with different means from those specifically illustrated by way of example, without thereby departing from the scope thereof according to the following claims.

0171368

## CLAIMS

1.    Apparatus for transferring drill rods from a store containing a plurality of rods to the actual axis of the rotation head of a drilling machine and vice versa, comprising a store containing a plurality of drill rods piled on one another, and means for manipulating and transferring the rods, characterised in that the store is constitued by an upwardly-open, box-shaped container (12) with a longitudinal extent at least equal to the length of a drill rod (26), one (13) of the longitudinal edges of the container (12) having a plurality of saddles (14) for the temporary receipt and support of a rod (26) to be transferred, and in that the means for manipulating and transferring the rods (26) include a straight bar (27), a pair of coplanar arms (28, 29) spaced from each other and rigidly fixed radially to the bar (27), each arm (28, 29) having a gripping member (30, 31, 32, 33) at its free end for circumferentially engaging and disengaging a drill rod (26), a sleeve (46) for rotatably supporting the bar (27) about its longitudinal axis, the sleeve (46) being connected to the rod container (12) by means of a pin (47) with an axis of rotation perpendicular to the longitudinal axis of the bar (27) and perpendicular to the longitudinal extent of the container itself, means (60) for effecting the angular displacement of the bar (27) about its longitudinal axis, means (52) for angularly displacing the support sleeve (46) about the pin (47) fixed to the structure (50) of the container (12), and means (34, 35) for effecting the opening and closing of the gripper member (30, 31, 32, 33) of each arm (28, 29).

2.    Apparatus according to Claim 1, characterised in that

0171368

the drill rod container (12) has a rectangular section in plan and is mounted on the drilling machine.

3. Apparatus according to Claims 1 and 2, characterised in that the arms (28, 29) fixed radially to the said bar (27) are located at the opposite ends of the bar.

4. Apparatus according to Claims 1 to 3, characterised in that the support sleeve (46) for the bar (27) is located in correspondence with one end of the bar and is connected to the rod container (12) by means of a bracket (50) fixed to the vertical side wall (51) of the container itself (12).

5. Apparatus according to Claims 1 to 4, characterised in that the gripper member supported at the end of each of the arms rigid with the bar includes a fixed jaw (30, 31) and a jaw (32, 33) which is movable angularly relative thereto with a movement about a pin (42, 43) rigid with the end of the arm, a hydraulic operating cylinder (34, 35) being articulated between the movable jaw (32, 33) and a point on the arm.

6. Apparatus according to Claims 1 to 5, characterised in that the means for displacing the bar (27) angularly about its longitudinal axis comprise a hydraulic cylinder (60) articulated between an appendage (57) rigid with the support sleeve (46) and an appendage (64) rigid with the radial arm (29) of the bar (27) close to the support sleeve (46), the hydraulic cylinder (60) being operative through angles of displacement within an arc of at least 180° between a position in which the arms (28, 29) rigid with the bar (27) lie parallel to the horizontal plane of the opening of the rod container (12) with the gripper means aligned with the rod support saddles (14)

0171368

and a position in which their free ends are in alignment with the axis of rotation of the head (6) of the drilling machine.

7.     Apparatus according to Claims 1 to 6, characterised in that the means for displacing the support sleeve (46) for the bar (27) angularly about the rotation pin (47) comprise a hydraulic cylinder (52) articulated between a point (54) rigid with the bracket (50) and a point (56) rigid with the sleeve (46), the hydraulic cylinder (52) being operative through angles  of displacement within an arc of at least 90° between a position in which the bar (27) is aligned parallel to the longitudinal edge of the rod container (12) opposite  the edge (13) having the support saddles (14) and a position in which it is aligned parallel to the actual axis of rotation of the head (6) of the drilling machine.

8.     Apparatus according to Claims 1 to 7, characterised in that the means for manipulating and transferring the rods (26) include rod lifting means (19, 20, 21, 22) which operate between   the   interior of the rod container (12) and the ongitudinal edge (13) provided with the saddles (14) for the temporary support of a rod (26).

Fig-1

Fig-2

0171368

# Fig-3

0171368

**Fig-4**

**Fig-5**

0171368

Fig-9

Fig-6

**Fig-7**

Fig-8

European Patent
Office

EUROPEAN SEARCH REPORT

0171368
Application number

EP 85 83 0187

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 828 943  (SIMON)<br>* Whole document *<br>--- | 1 | E 21 B   19/15<br>B 23 Q    3/157 |
| P,X | FR-A-2 544 789  (ZEIS et al.)<br>* Whole document *<br>--- | 1-7 | |
| A | DE-A-3 108 053  (LEVERMANN et al.)<br>* Whole document *<br>--- | 1,2 | |
| A | GB-A-2 083 106  (BOLAND)<br><br>--- | | |
| A | US-A-3 682 259  (CINTRACT et al.)<br><br>----- | | |
| | | | **TECHNICAL FIELDS SEARCHED (Int. Cl.4)**<br><br>E 21 B<br>F 41 F<br>B 65 G<br>B 23 Q |

The present search report has been drawn up for all claims

| Place of search | Date of completion of the search | Examiner |
|---|---|---|
| THE HAGUE | 15-10-1985 | BENZE W.E. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03.82